# EUROPEAN PATENT SPECIFICATION

(11) **EP 3 798 127 B1**
(45) Date of publication and mention of the grant of the patent: **24.11.2021**
(21) Application number: 20197612.3
(22) Date of filing: 22.09.2020
(51) Int. Cl.: B64D 17/80, B64D 17/72

(54) **BALLISTICALLY-DEPLOYED CONTROLLABLE PARASAIL**
BALLISTISCH ENTFALTETER STEUERBARER GLEITSCHIRM
PARAVOILE COMMANDABLE À DÉPLOIEMENT BALISTIQUE

(30) Priority: 30.09.2019 US 201916588558
(43) Date of publication of application: 31.03.2021
(73) Proprietor: Honeywell International Inc., Charlotte, NC 28202 (US)
(72) Inventor: DRISCOLL, Kevin Raymond, Charlotte, NC 28202 (US); HALL, Brendan, Charlotte, NC 28202 (US); ELGERSMA, Michael Ray, Charlotte, NC 28202 (US)
(74) Representative: Haseltine Lake Kempner LLP

(56) References cited:
- US-A- 6 144 899
- US-A1- 2002 070 315
- US-A1- 2017 158 338

## Description

### BACKGROUND

Emerging technology enable operation of vehicles such as air taxis and delivery drones at low altitudes and in densely populated areas. One issue plaguing the roll-out of these vehicles is the potential catastrophic injury to people and property if the primary propulsion mechanisms of these vehicles fail during operation. Some have proposed that the vehicles could be provided with parachutes. However, parachutes fail to provide immediate support to vehicles and often require the vehicle to fall a sufficient amount before the drag of the parachute reduces the downward velocity of the vehicle. Furthermore, these parachutes may cause the vehicle to collide with nearby structures and people. When parachutes inflate in dense urban environments, the parachute may catch in the windy regions present in the urban environment, causing the vehicle to be at the whim of the wind. Therefore, there is a need for a more robust means to aid vehicles when primary propulsion mechanisms fail beyond the traditional parachute.

US6144899A discloses a recoverable airborne instrument platform that determines its present position and uses this data to execute a predetermined flight plan and ultimately guide its descent to a predetermined landing site.

US2017/158338A1 discloses a technique for landing a drone using a parachute. The technique includes a parachute deployment system (PDS) that can deploy a parachute installed in a drone and land the drone safely. The parachute may be deployed automatically, e.g., in response to a variety of failures such as a free fall, or manually from a base unit operated by a remote user.

### SUMMARY

The present invention is defined by the independent claims, to which reference should now be made. Advantageous embodiments are set out in the sub claims. The Embodiments of the present invention provide methods and systems for a recovery system and will be understood by reading and studying the following specification.

### DRAWINGS

Embodiments of the present invention can be more easily understood and further advantages and uses thereof more readily apparent, when considered in view of the description of the preferred embodiments and the following figures in which:
Figure 1 is a diagram of one embodiment of a vehicle and emergency recovery system with a parasail.
Figure 2 is a block diagram of an example embodiment of an emergency recovery system.
Figure 3 is a block diagram of an example embodiment of a vehicle with an emergency recovery system.
Figure 4A is a diagram of an example of the implementation of the guidance provided by the emergency recovery system.
Figure 4B is a diagram of an example of the implementation of the guidance provided by the emergency recovery system at a different angle.
Figure 5A is a diagram of an example implementation of the guidance provided by the emergency recovery system.
Figure 5B is a diagram of an example of the implementation of the guidance provided by the emergency recovery system at a different angle.
Figure 6 is a diagram of an example embodiment of the three-dimensional map.
Figure 7 is a flow chart diagram of an example embodiment of a method of using the emergency recovery system.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

The future of urban transportation continues to resemble the lofty world of the Jetsons with personal air mobility vehicles being used for low altitude urban travel. Air mobility vehicles, for example quad-copters, hexa-copters, octo-copters, and personal planes, are set to potentially replace land-based transportation for ride-share commutes in urban environments. These air mobility vehicles generally contain internal redundancies to protect against in-flight failures; however, internal redundancies inherently cannot prevent all catastrophic failures.

Many proposed air mobility vehicles will operate at relatively low altitudes between 121.92 m and 182.88 m (400 ft and 600 ft) in altitude. This reduces the effectiveness of traditional parachute systems which may require the vehicle to fall a distance of 182.88 m (600 ft) or more before the parachute will slow the descent of the vehicle.

What is described herein is an emergency recovery system with an externally mounted, ballistically-deployed parasail capable of catching a vehicle at low altitude and gliding the vehicle safely to the ground. In normal operation, the parasail is compactly stored within a housing external to the vehicle. The parasail includes a release mechanism such as a releasable fastener that is triggered either manually or automatically through a failsafe system. For example, the parasail could be fastened using an electromagnet clamp or through a latch. Once released, the parasail is ballistically deployed from the external housing, expanding out of the external housing while remaining connected through load bearing supports. As the parasail separates from the external housing, it rapidly expands, suspending the emergency recovery system attached to the vehicle. Once suspended from the parasail, the emergency recovery system uses systems and processes stored within the emergency recovery system to direct the parasail to control the glide to a landing area. Thus, the vehicle remains safe during an emergency landing, as the parasail both suspends the vehicle before the vehicle has a chance to fall due to gravity and directs the vehicle to a safe location for landing.

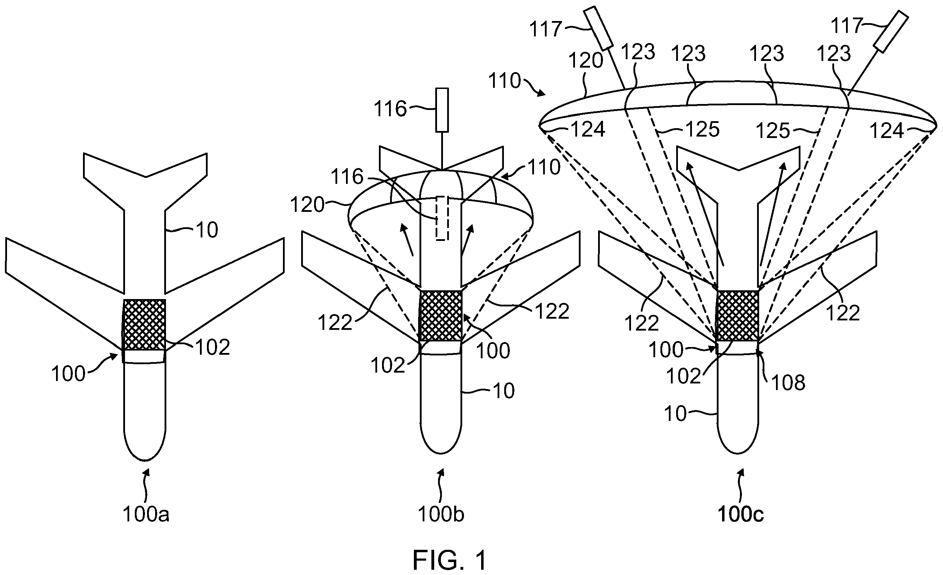

In the example shown in Figure 1, an emergency recovery system 100 is attached to a vehicle 10, shown in three exemplary stages of operation: enclosed 100a, mid-launch 100b, and fully expanded 100c. In some examples, the emergency recovery system 100 relies only on components and systems stored within the emergency recovery system 100. The emergency recovery system 100 is configured to launch primary ballistics 116 to pull a parasail 110 from within the emergency recovery system housing 102. While the emergency recovery system remains enclosed within the emergency recovery system (ERS) housing 102, the primary ballistics 116 and the parasail 110 are compactly stowed. In some examples, at least one releasable fastener is attached to the ERS housing 102. In other examples, the ERS housing 102 comprises at least one releasable fastener. The ballistics system 208 and parasail 110 are stowed such that the primary ballistics 116 pulls the parasail 110 from the housing 102 and the parasail 110 simultaneously begins to unfold. The ballistics system 208 comprises a form of explosion or compressed force sufficient to rapidly deploy the parasail 110. In some examples, the primary ballistics 116 activates from above the attached parasail 110, pulling the parasail 110 from the housing. In another example, the primary ballistics 116, shown with dashed border, activates from below the parasail 110, effectively pushing the parasail 110 from a structured point of the canopy 120.

Generally, the parasail 110 comprises a canopy 120 attached to the housing 102 of the emergency recovery system 100 with one or more load bearing supports 122. In the example shown in Figure 1, the one or more load bearing supports 122 couple to the canopy 120 at a load receiver point 124, and in some embodiments along one or more structural ridges 123 of the canopy 120, such as the load bear supports 125 attached to the one or more structural ridges 123. The structural ridges 123 may provide the canopy 120 with structure when fully expanded and may provide form necessary for control while the parasail 110 glides. The one or more load bearing supports 122 may couple to the parasail 110 through bolts, holes in the canopy 120, and/or applied adhesives. The canopy 120 comprises generally a thin, lightweight material configured to be flexible yet retain shape while under tension. When in use, the unfolded canopy 120 stretches to resemble a parasail ― triangular or rectangular shape; however, it should be understood that the canopy 120 can resemble any appropriate shape. The shape of the parasail 110 and location of the one or more load bearing supports 122 may affect the control provided by use of the flight controls and actuators 108 on the parasail 110. The canopy 120 should be sufficiently large such that lift generated by the parasail 110 meaningfully counteracts the weight of the emergency recovery system 100 and attached vehicle 10.

In the example shown in Figure 1, the one or more load bearing supports 122, *e.g.* cables, couple, on the opposite end from the canopy 120, to the emergency recovery system (ERS) housing 102 at one or more points. While the load bearing supports 122 are required to bear the weight of the emergency recovery system 100, the load bearing supports 122 are configured to remain a predefined length under tension. The emergency recovery system 100 is configured to pull the load bearing supports 122 to steer the parasail 100. The one or more load bearing supports 122 remain taught during use of the parasail 110 and couple on the end opposite to the parasail 110 to one or more flight controls and actuators 108 within the emergency recovery system housing 102. The flight controls and actuators 108 include, for example, control surfaces (e.g. rudder(s), elevator(s), and/or aileron(s)), servo(s)), and systems for controlling the foregoing. The flight controls and actuators 108 are configured to pull or release the load bearing supports 122 as necessary to change the orientation of the parasail 110, effectively steering the parasail 110 and augmenting the course of the vehicle 10. In some examples, the flight controls and actuators 108 include servos attached to the one or more load bearing supports 122, where the servos are configured to pull and release the one or more load bearing supports 122 attached at the other end to the parasail 110, thus pulling and releasing portions of the parasail 110 changing the direction of the parasail 110. In some examples, the flight controls and actuators 108 steer the parasail 110 using servos within the emergency recovery system housing 102 coupled to the load bearing supports 122. The ERS housing 102 is configured to use a standard interface to affix to any one of a number of vehicles 10 without compromising the structure of the vehicle and without relying on the internal components of the vehicle. In some examples, the ERS housing 102 includes electronic or mechanical components designed to interact with the internal components of the vehicle, including but not limited to displays, emergency systems, propulsion mechanisms, e.g. engines, propellers, wheels, or turbines, and/or communication systems.

The parasail 110 is configured to be deployed using primary ballistics 116. The ballistics system 208 comprises one or more ballistics units and the electronics necessary to ignite and direct the one or more ballistics. In some examples, the parasail 110 releases in a two-step process: in the first step, one or more primary ballistics 116 attached to the compact parasail 110 fire orthogonal to the top of the vehicle 10, ideally vertically; in the second step, the parasail 110 is pulled from the ERS housing 108 and rapidly expands through the combination of forces of the primary ballistics 116 and surrounding air. In another example, a first set of primary ballistics 116 attached to the compact parasail 110 fire orthogonal to the top of the vehicle 10 separating the parasail from the ERS housing 102, and secondary ballistics 117 staggered in various stages to launch outward from compact parasail 110 separating along a plane parallel to the top of the vehicle 10, expanding the parasail 110 to full dimensions. In another example, not covered by the present claims, the parasail 110 comprises a hollow core between layers of canopy 120 and can inflate using secondary ballistics 117 (not pictured in diagram) within the parasail 110, which may include compressed gasses within the canopy, controlled ballistic explosions, and/or another method of rapid inflation. In some examples, also not covered by the present claims, the parasail 110 comprises various layers of canopy 120 such that portions of the parasail 110 can inflate or take on a predefined shape when fully expanded.

Once the parasail 110 is deployed, a guidance system 216 actively steers the parasail 110 as the vehicle 10 and the parasail 110 fall to the ground. The guidance system 216 is coupled to and controls the vehicle flight controls and actuators 108. The flight controls and actuators 108 are used to control velocity (speed and direction) and acceleration of the emergency recovery system 100. In some examples, the flight controls and actuators 108 may include flight controls and actuators 108 on a vehicle 10 attached to the emergency recovery system 100.

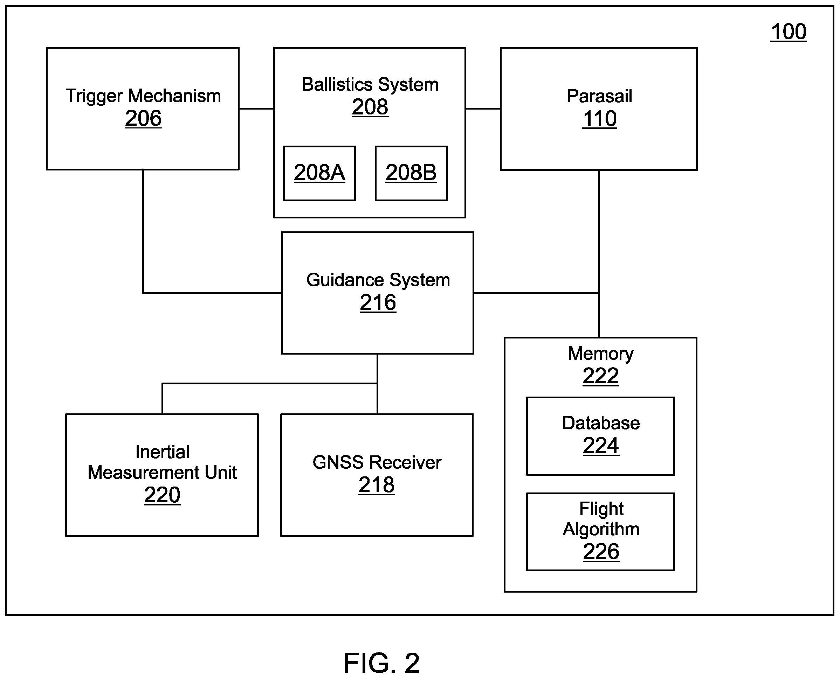

Figure 2 is a block diagram of the emergency recovery system 100. The emergency recovery system 100 comprises a guidance system 216 coupled to a trigger mechanism 206 and at least one of a Global Navigation Satellite System (GNSS) receiver 218, a memory 222, and an inertial measurement unit (IMU) 220. In some examples, the guidance system 216 relies on the GNSS receiver 218 to determine the location of the emergency recovery system 100. The GNSS receiver 218 receives signals from at least one satellite positioned in known positions above the earth. Using the at least one signal, the GNSS receiver 218 can determine three-dimensional geo-coordinates with a high degree of accuracy. The guidance system 216 is configured to receive the three-dimensional geo-coordinates of the emergency recovery system 100. In other examples, the guidance system 216 is configured to access a GNSS receiver 218 within the vehicle 10. In some examples, the guidance system 216 is configured to send and receive information with other navigational components (e.g. an altimeter, and an altitude and heading reference system (AHRS)). Other means of determining the three-dimensional position of the emergency recovery system 100 are considered, including but not limited to inertial navigation systems, optical positioning systems, and radar positioning systems. The guidance system 216 can use a non-GNSS positioning system as it would a GNSS receiver, receiving information regarding the position of the emergency recovery system 100 and the vehicle 10.

The guidance system 216 uses the three-dimensional position information in comparison to three-dimensional maps stored in a database 224 within the memory 222. In some examples, the three-dimensional maps are topographical diagrams of landing sites along the known route of the vehicle 10. As the vehicle 10 descends using the parasail 110, the guidance system 216 can use the three-dimensional map to determine an acceptable landing position for the vehicle 10. Furthermore, the guidance system 216 can determine potential obstacles in the descent path of the vehicle 10 and can steer the parasail 110 to avoid collision with the obstacle.

The emergency recovery system 100 is configured to be mountable to various types of vehicles, including aircraft. The emergency recovery system 100 may use the components of the vehicle; however, it is configured to be self-sufficient and may comprise elements necessary to power equipment, computers, and machinery as described. Furthermore, the emergency recovery system 100 may comprise systems redundant to those used by a given vehicle. In some examples, the emergency recovery system 100 may be configured to rely on the redundant systems of the vehicle where the equivalent system may or may not be present within the emergency recovery system 100. Such systems may include but should not be considered limited to a GNSS, an inertial measurement unit, and/or an altimeter.

In the example shown in Figure 2, a trigger mechanism 206 is coupled to a ballistics system 208 and to the guidance system 216. The trigger mechanism 206 may be configured to be activated by external activation such as through the press of a button or the flipping of a switch. Alternatively, the trigger mechanism 206 may be configured to activate automatically, such as sensors configured to detect failure of an external component. Upon receiving an input signal, the trigger mechanism 206 directs the ballistics system 208 to launch. In some embodiments the trigger mechanism 206 relies on the guidance system 216 and the inertial measurement unit 220 to determine whether the emergency recovery system 100 is upright, e.g. substantially facing away from the ground, before directing the ballistics system 208 to launch.

The ballistics system 208 comprises at least one primary ballistics element 208A (also referred to as the primary ballistics 116 in Figure 1) attached to the parasail 110. In some examples, the ballistics system 208 comprises at least one secondary ballistics element 208B (also referred to as the secondary ballistics 117 in Figure 1), wherein the secondary ballistics element 208B may be configured to activate after the primary ballistic element 208A. In some examples, the secondary ballistics element 208B includes a timing mechanism within the secondary ballistics 117 to delay activation from the primary ballistics 116. The ballistics system 208 is configured to pull the parasail 110 from its compact housing. In some examples, the ballistics system 208 consists of a small rocket attached to the parasail 110 configured to detach when the parasail 110 is fully expanded. In other examples, the ballistics system 208 consists of multiple ballistics attached to the corners of the parasail 110. The advantage of a ballistic parachute over a traditional parachute is that the ballistics eject the canopy away from the vehicle rapidly, reducing the amount of time it takes for the parachute to expand. A ballistic parasail functions largely in the same way, relying on the small ballistic explosion to rapidly expand to transition the vehicle 10 to a gliding state.

The inertial measurement unit 220 provides information to the other components about the attitude, heading, and orientation of the emergency recovery system 100 and the vehicle 10 to which the emergency recovery system 100 is attached. In some examples, the inertial measurement unit 220 includes at least one accelerometer, at least one gyroscope, altimeter, and/or at least one magnetometer. Each accelerometer measures acceleration along an axis. Each gyroscope measures angular rotation around an axis. Each magnetometer determines direction of an ambient magnetic field. The data from the inertial measurement unit 220 may be used to determine the orientation of the vehicle 10 in relation to the ground and can be used to determine when the top of the vehicle 10 is orthogonal to the earth. Furthermore, the inertial measurement unit 220 can be used in conjunction with the trigger mechanism 206 to launch the primary ballistics 116 when the vehicle 10 is upright. The guidance system 216 may be configured with a range of angles off parallel to the ground to define upright. Thus, upright may include tolerance ranges within which the trigger mechanism 206 may be configured to launch the primary ballistics 116. The guidance system 216 may be configured to launch the primary ballistics 116 if the vehicle 10 is not upright if circumstances necessitate. For example, if the vehicle 10 is determined to be in a horizontal spin while upside-down. The ballistics system 208 may be configured to launch at a range of angles off normal to the top of the vehicle 10. For example, if the vehicle 10 is upright but tilted two degrees off axis, the ballistics system 208 may be configured to launch two degrees off normal to the top of the vehicle to compensate, such that the ballistics system 208 fires away from the earth along the axis of the earth's gravitational force.

For example, the memory 222 may be implemented with electronic analog circuitry, including circuitry used to implement electronic analog computers. A database 224 and a flight algorithm 226 may be stored within a memory or other non-transitory computer readable medium, hereinafter "the memory 130".

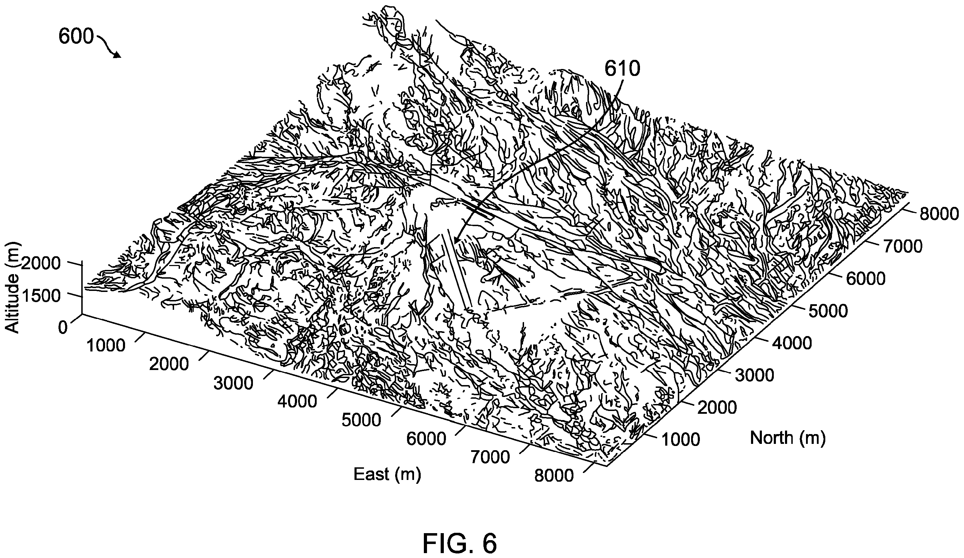

The database 224 stored within the memory 222 contains information of three-dimensional maps to which the position of the emergency recovery system 100 can be referenced to determine an appropriate landing site for the vehicle. In some embodiments, the database 224 is loaded with coordinate positions of suitable landing sites along the known path of the vehicle 10, such that for any point along the known path of the vehicle 10, a suitable landing site can be reached through a guided descent. In other examples, the database 224 contains coordinates of suitable landing sites in an area around where the vehicle 10 is determined to operate. For example, the database 224 may contain the coordinates of suitable landing sites in and around a greater metropolitan area. The database 224 may also contain information on three-dimensional maps (as further described in the example shown in Figure 6). These three-dimensional maps may be topographical representations of the area along the known flight path of the vehicle 10 or may be the general area around where the vehicle 10 is known to operate. The database 224 may be configured to update in real time in communication with off-board servers, or through periodic updates. The three-dimensional maps may include preferred suitable landing sites such as wide roads, airstrips, and fields. The guidance system 216 may be configured to determine a suitable landing site from a three-dimensional map in real time. Furthermore, the guidance system 216 may determine that a landing site is unacceptable, for example if an object obstructs the preferred landing site, in which case the guidance system 216 may seek an alternate landing site from the three-dimensional map which is determined to be within range of the emergency recovery system 100.

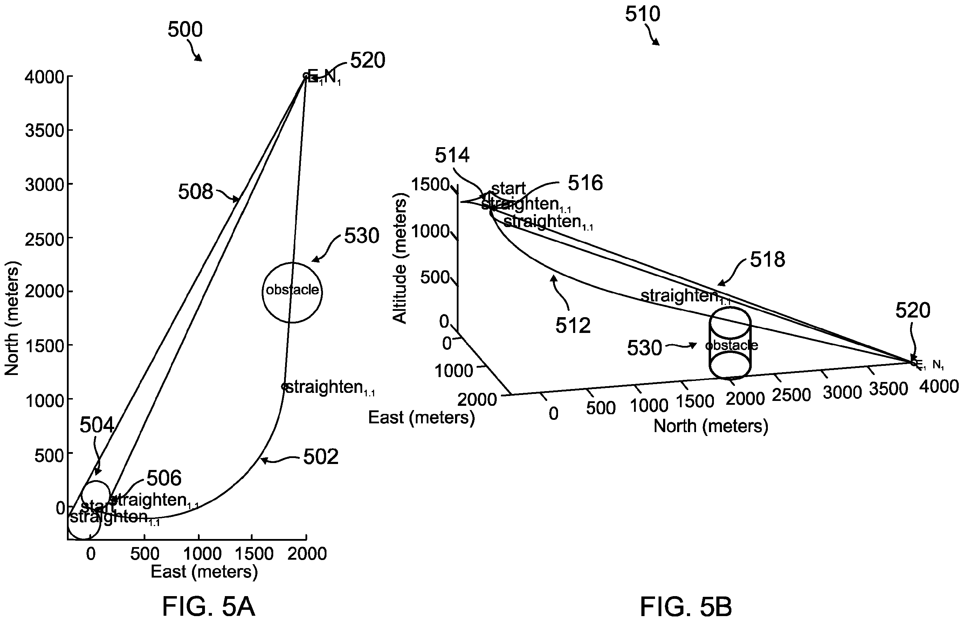

The flight algorithm 226 stored within the memory designates the path along which the emergency recovery system 100 directs the vehicle 10 towards a landing site. The flight algorithm 226 comprises a preloaded method to guide a vehicle from a given position and orientation towards a desired location. The flight algorithm 226 receives the position and attitude from other components within the emergency recovery system 110, for example the GNSS Receiver 218 and/or the inertial measurement unit 220. As the emergency recovery system 110 does not have any form of propulsion, the flight algorithm 226 must rely on manipulation of the parasail 110 for guidance. In one example (further described in Figures 5A and 5B), the flight algorithm 226 uses a series of curves and straight lines to position the vehicle in line with a landing site such that the vehicle will land on the landing site along a particular axis. For example, the flight algorithm 226 might direct the flight controls and actuators 108 to pull the parasail 110 such that the vehicle spirals in concentric circles to a given height, then releases the parasail 110 creating a wider spiral, and then further adjusting the parasail 110 such that the vehicle lands at the landing site along the desired path of the landing site, such as along a runway.

In some examples, the trigger mechanism 206 is configured to interact with the vehicle 10, as well as the emergency recovery system 100. The trigger mechanism 206 may be activated automatically or manually. In examples where the trigger mechanism 206 is automatic, the trigger mechanism may connect to a system in the vehicle 10 which indicates that emergency procedures are necessary. In examples where the trigger mechanism 206 is manual, a button, a switch and/or some other form of activation may be affixed within reach of the passengers and/or pilots of the vehicle 10. In some examples, the manual trigger may be off board the vehicle 10 in which case the trigger mechanism 206 may be remotely activated. When the trigger mechanism 206 is activated, the emergency recovery system 100 implements at least the ballistics system 208 and may implement other systems. For example, the emergency recovery system 100 may initiate a crow bar mechanism 302, the function of which is explained in more detail below, within the vehicle 10.

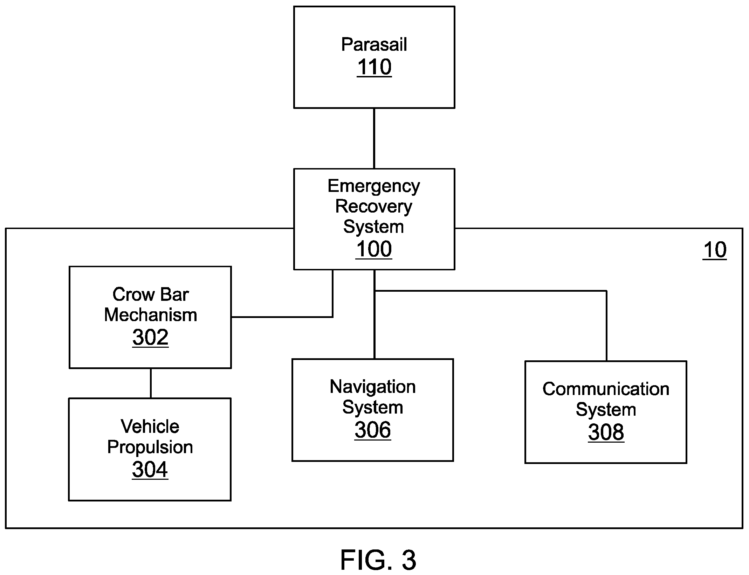

Figure 3 is a block diagram of an example of an emergency recovery system 100 within a vehicle 10. The emergency recovery system 100 is designed to interact with a wide array of vehicles including but not limited to urban air mobility units. Some components of the emergency recovery system 100 are designed to mount externally to the vehicle 10, such as the ERS housing 102 containing the parasail 110, and the ballistics system 208 While the ERS housing 102 may contain other components of the emergency recovery system 100 as described above, it is conceived that the above components may be incorporated into the vehicle 10 and/or the above components may be shared by the vehicle 10.

In the example shown in Figure 3, a crow bar mechanism 302 is coupled to the emergency recovery system 100, the trigger 140, and the vehicle propulsion 304 for example one or more engines, propeller, and/or turbines. When the trigger is activated, the crow bar mechanism 302 locks down the engines 204 and prevents the engines 204 from revolving and/or moving, since moving propellers would interfere with the parasail. The crow bar mechanism 302 function mechanically, electrically, and/or magnetically. For example, the crow bar mechanism 302 may involve a physical object being inserted into the revolving vehicle propulsion 304, physically jamming the vehicle propulsion 304. Alternatively, the crow bar mechanism 302 may involve the introduction electro-magnets placed around the vehicle propulsion, causing the vehicle propulsion to stop due to the increased force necessary to maintain revolutions.

In the example shown in Figure 3, the emergency recovery system 100 is coupled to the vehicle navigation system 306 and the vehicle communication system 308. The vehicle navigation system 306 may comprise a GNSS system, an inertial measurement unit, an altimeter, an attitude and heading unit, optical sensors and/or radar sensors. The emergency recovery system 100 may be configured to rely on the vehicle navigation system 306 either as a redundancy to the components within the emergency recovery system 100, in conjunction with the components within the emergency recovery system 100, and/or instead of the components within the emergency recovery system 100. The vehicle communications system 308 may comprise one or more antenna, transceivers, radio units, and/or other communication devices. The emergency recovery system 100 may be configured to use the vehicle communications system 308 to notify AOC and/or AOT that the vehicle 10 is relying on the emergency recovery system 100 and/or the landing site designated by the emergency recovery system 100.

The parasail 110 is configured to guide the emergency recovery system 100 attached to a vehicle safely to the ground. In some examples, the emergency recovery system 100 has a desired landing site such as a runway or a designated emergency landing space, *e.g.* a river or a highway prior to activation. In other examples, the emergency recovery system 100 determines the desired landing site through algorithmic determinations, using the distance between the vehicle 10 and the landing site, the estimated distance travelable by the vehicle 10, and obstacles between the vehicle 10 and the landing site.

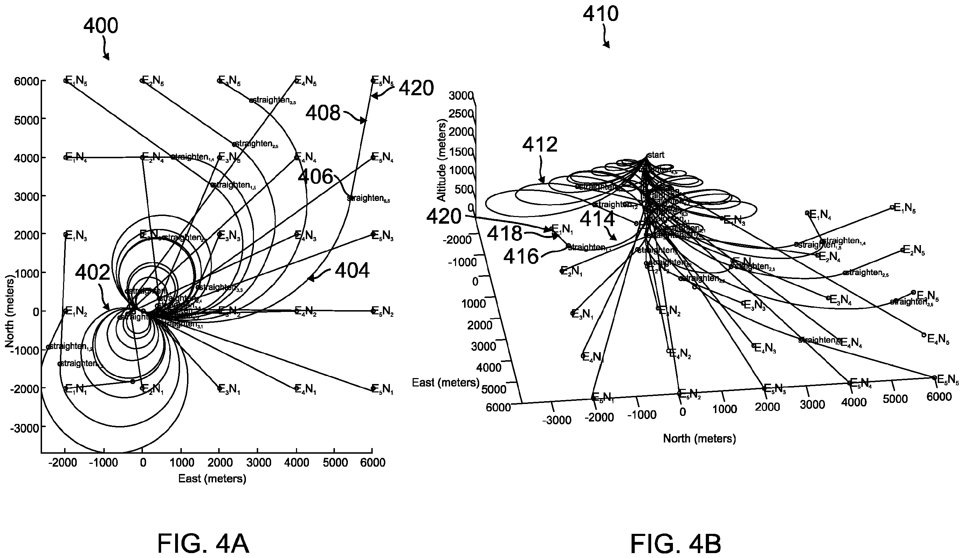

In the example shown in Figures 4A and 4B, paths of descent is shown. In Figure 4A, a birds-eye view of an example guidance and landing pattern is shown 400. In this example, the "y" axis represents the north-south direction in meters and the "x" axis represents the east-west direction in meters. This example depicts how the emergency recovery system 100 can direct the vehicle 10 in any particular direction without an independent propulsion mechanism. In some examples, the flight algorithm 136 stored in the memory 130 provides precomputed instructions to the guidance system 216 for a given landing site. In other examples, the guidance system 216 uses the flight algorithm 226 to actively determine the optimal path towards the landing site. In this example, the flight controls and actuators 108 steer the vehicle 10 in a circular arc 402 until the desired altitude has been reached. After the desired altitude has been reached, the circular arcs widens to a broader arc 404 until a desired trajectory has been met, for example at 406, at which point the flight controls and actuators 108 cause the vehicle 10 to enter a straight line flight pattern 408 toward the intended landing site 420. The flight controls and actuators create the various required arcs by pulling only one side of the canopy. This pulling of the load bearing supports 122 steers the vehicle in a natural curve based on the magnitude of the pull. The guidance system 216 is configured to determine the desired angle of approach and the from the desired angle of approach control the flight controls and actuators to implement the pulling of the canopy. If the vehicle 10 needs to reduce its altitude before the approach to a landing site, the guidance system 216 can instruct the flight controls and actuators 108 to conduct circular rotations, the wider the circle, the more altitude that is lost before the vehicle returns to its original orientation. The guidance system 216 can rely on any of the GNSS receiver, the inertial measurement unit 220, and/or the database 224 to determine the position of the vehicle 10 in relation to the potential landing sites.

Figure 4B shows a three-dimensional representation of the bird's eye view 410 shown in Figure 4A. The "z" axis shows altitude in meters, the "x" axis shows the east-west direction in meters, and the "y" axis shows the north-south direction in meters. In this example, the use of circular arcs 412 to reduce altitude before the final correction in the broader arc 414 to align the vehicle 10 along the proper trajectory before the vehicle 10 enters a straight-line flight pattern 418, at 416, towards the intended landing site 420 at the intended altitude. In some examples, the guidance system 216 factors in the angle of approach. The guidance system 216 can operate the flight controls and actuators 108 to reduce or increase the vertical angle of approach. In some examples, the guidance system 216 is configured to actively monitor the angle of approach in order to avoid obstacles.

In the example shown in Figures 5A and 5B, an obstacle 530 obstructs the path of the vehicle 10 in the "x"-"y" plane. Figure 5A, shows an example 500 of various paths the guidance and navigation system 216 may take in avoiding a collision with the obstacle 530. If the guidance system 216 were not able to control the angle of approach, the vehicle 10 may collide with the obstacle. For example, if vehicle 10 glides along one preferred path with a broad arc curve 502, the vehicle 10 would collide with the obstacle 530. In one example, the guidance system 216 avoids collision with the obstacle by performing circular arcs 504 until the desired altitude and trajectory is reached, for example at 506. This circular arc trajectory has the advantage of limiting the movement of the vehicle 10 within the horizontal plane, minimizing the chance that the vehicle 10 collides with an obstacle in an urban environment where buildings and structures occupy uniformly the horizontal planes along the landing path of an urban mobility vehicle configured to fly between buildings. When the desired altitude and trajectory is achieved, the flight controls and actuators 108 cause the vehicle 10 to enter a straight-line flight pattern 508 toward the intended landing site 520.

Figure 5B shows an example 510 of various paths the guidance system 216 may take in avoiding a collision with the obstacle 530. For example, if the vehicle 10 glides along one preferred path 512 with a broad arc curve, the vehicle may collide with the obstacle 530. In one example, the emergency recovery system 100 avoids collision with the obstacle 530 by determining a trajectory of flight which avoids collision with the obstacle 530 or any other obstacle. The guidance and navigation system then guides the vehicle 10 to a lower altitude using a repeated circular arc 514. This circular arc allows the emergency recovery system 100 to reduce the altitude of the vehicle 10 using a minimal amount of horizontal space. Once the vehicle reaches a preferred altitude, for example at 516, the vehicle 10 is guided directly to the landing site, for example at coordinates (2000, 4000, 0) 520, along a straight-line flight pattern 518.

In Figure 6, an example of a three-dimensional map 600 is shown. In this example, the three-dimensional map 600 is a topographical map depicting the area around an ideal landing site 610. In the example, the landing site 610 is a length of flat runway. The three-dimensional map 600 may show one or more landing sites 610, or in some examples a landing site 610 may not be present in which case the guidance system 216 can determine an appropriate landing location based on the terrain provided. Associated with the three-dimensional map may or may not be geo coordinates 620 at a given density associated with the area within the database 224. In the examples with geo coordinates, the guidance system 216 can utilize the location of various objects to determine whether the vehicle is on a collision course with an obstacle in the terrain. In some examples, the three-dimensional map 600 is accompanied by information, e.g. communication channels and known hazards such as telephone wires, about the particular location.

In the example shown in Figure 6, the length of runway 610 creates a preference for the guidance system 216 to land along the length of the runway 610. Using the methodology described in Figures 4 and 5, the guidance system 216 adjusts the descent of the vehicle 10 through a series of spiral-turns and straight descents until the vehicle 10 is on a descent towards the landing site 610. In some examples, the emergency recovery system would automatically provide a communication to the runway tower 640, if one is identified in the database 224, informing the runway tower 640 that the vehicle 10 was on a controlled descent and to keep the runway 610 clear.

For example, the guidance system 216 can use the three-dimensional map 600 stored within the memory 130 to determine a landing site for the vehicle 10. In this example, assuming that the vehicle 10 can reach any point on the three-dimensional map 600, the guidance system 216 may look for a relatively flat linear surface

In the example shown in in Figure 6, the three-dimensional map 600 contains 200,000 three-dimensional line segments, from an 8 kilometer-by-8 kilometer region of Earth's surface. At this resolution, a one meter-by-one meter requires 3.25 Megabytes. Thus, the amount of memory needed to store the Earth's entire land surface at this resolution is approximately 7.6 Terabytes. In some examples, the three-dimensional map loaded into the memory 130 of the vehicle contains the Earth's entire land surface with geo-coordinates associated with the three-dimensional map. Thus, the emergency recovery system 100 can identify a landing site anywhere on the Earth's land surface or waterways.

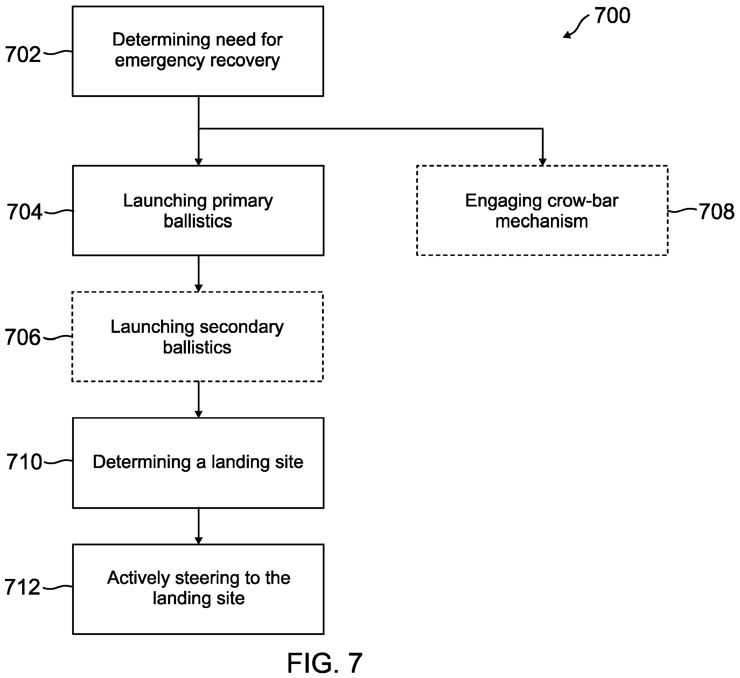

Figure 7 illustrates examples of a method 700 for utilizing an emergency recovery system in conjunction with a vehicle. To the extent that the embodiments of method 700 shown in Figure 7 is described herein as being implemented in the systems shown in Figures 1-3, it is to be understood that other embodiments can be implemented in other ways. Furthermore, to the extent that the embodiments of method 700 is described herein as using the methods shown in Figure 4-5, it is to be understood that other embodiments can be implemented in other ways. The blocks of the flow diagram have been arranged in a generally sequential manner for ease of explanation; however, it is to be understood that this arrangement is merely exemplary, and it should be recognized that the processing associated with some methods (and the blocks shown in the figures) can occur in a different order or simultaneously.

In block 702, determine whether emergency recovery is needed. In some examples, an operator or occupant of a vehicle attached to the emergency recovery system can activate the emergency recovery system using a button, switch, or other activation method. In some examples, a determination can be made in conjunction with the systems of the emergency recovery system of the vehicle. For example, if the vehicle's propulsion loses power, it may trigger an emergency recovery. Alternatively, a sensor may determine that the vehicle is losing altitude at an unsustainable rate, in which an emergency recovery may be triggered.

In block 704, launch the primary ballistics. The primary ballistics are configured to pull a parasail from the emergency recovery system housing so that the parasail can glide the emergency recovery system and attached vehicle to the ground. The primary ballistics can take many forms based on the configuration of the emergency recovery system. Generally, the primary ballistics provides sufficient force to rapidly deploy the parasail directly above the emergency recovery system, and thus directly above the vehicle. In some examples, the primary ballistics comprise one or more rockets coupled with detachable wires at various points on the parasail. In some examples, the primary ballistics also separate the housing such that the parasail and primary ballistics can expand outward unimpeded. When the parasail is fully expanded or in the process of expanding, the primary ballistics may be configured to detach from the parasail, may be configured to expend itself during ballistic propulsion, or may be configured to rest on the parasail without damaging the parasail. In some examples, secondary ballistics may launch as depicted in block 706. These secondary ballistics may share structural similarity with the primary ballistics. The secondary ballistics are configured to attach to the parasail to expand the parasail outward to its full area. In some examples, the secondary ballistics attached to the corners of the parasail pull the parasail outward. In some examples, the secondary ballistics reside within a hollow parasail and rapidly inflate the parasail upon activation. The secondary ballistics are configured to activate either after an amount of time after the activation of the primary ballistics or based on some inertial or positional trigger.

In block 708, a crow-bar mechanism may be engaged. The crow-bar mechanism comprises a hard shut off of the propulsion mechanism of the vehicle. For example, the crow bar mechanism may comprise a magnetic, electrical, or physical brake on an engine. In a further example, metal bars, for example resembling crow-bars, may be inserted into the propulsion means, for example a propeller, stopping any rotation. When an emergency recovery is deemed necessary, it may benefit the operation of the primary ballistics and expansion of the parasail to cease the propulsion of the vehicle. In examples where the crow bar mechanism is enacted, the emergency recovery system is integrated with the vehicle. Ideally, the crow bar mechanism can rapidly halt the propulsion of the vehicle without severely damaging the vehicle; however, for many vehicles that may not be the case. In those cases, a modified deceleration system for the engine can decelerate the engine at the maximum rate that will not cause damage.

In block 710, determine a landing site. The emergency recovery system determined a landing site from data either stored within the emergency recovery system, within the vehicle, or within remote system. As the path of the vehicle may be known, ideal landing sites may be predetermined along the predicted path of the vehicle. In other examples, topographical maps may be installed which would allow the emergency recovery system to make a determination of a landing site based on the three-dimensional position of the vehicle. For further detail on the three-dimensional map, see the description of Figure 6.

In block 712, actively steer to the landing site. Once the parasail is expanded, the parasail is steered using actuators on the emergency recovery housing attached via load bearing supports to the parasail. The load bearing supports are pulled and released, changing the direction of the parasail and thus guiding the glide of the emergency recovery system. The emergency recovery system may use one or more of the methods described in Figures 4A, 4B, 5A, and 5B. By gliding the vehicle using curved arcs, the emergency recovery system can guide the vehicle to the determined landing site, while applying a constant aerodynamic load to the vehicle and its occupants.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims.

## Claims

1. A recovery system (100), comprising:
a housing (102);
a parasail (110) comprising a canopy (120) coupled within the housing (102) and fastened by a releasable fastener attached to or comprised within the housing (102), wherein the parasail (110) is compressed into a compact mass and is configured to rapidly expand;
primary ballistics (116) attached to the parasail (110), wherein the primary ballistics (116) are configured to launch the parasail (110) from the housing (102);
a guidance system (216) within the housing (102) wherein the guidance system (216) is configured to steer the parasail (110) and guide the recovery system (100) to a landing site (520); **characterised in that** the recovery system (100) further comprises
secondary ballistics (117) attached to the parasail (110), wherein the secondary ballistics (117) are configured to activate after the primary ballistics (116) and to stretch the corners of the parasail (110).

2. The recovery system (100) of claim 1, wherein the parasail (110) couples to one or more load bearing supports (122) coupled to at least one actuator (108) configured to pull and release the load bearing supports (122).

3. The recovery system (100) of claim 1, wherein the parasail (110) further comprises structural ridges (123) along the width of the parasail (110).

4. The recovery system (100) of claim 1, further comprising a global navigation satellite system receiver unit (218) coupled to the guidance system (216) configured to provide the guidance system (216) three-dimensional position information.

5. The recovery system (100) of claim 1, further comprising a memory (222), wherein the memory (222) contains a database (224) comprising data for at least one landing site along a route.

6. The recovery system (100) of claim 1, further comprising a memory (222), wherein the memory (222) contains a database (224) comprising data for at least a three-dimensional map.

7. The recovery system (100) of claim 1, wherein a timing mechanism is stored within the secondary ballistics (117).

8. The recovery system (100) of claim 1, further comprising a trigger mechanism (206) and an inertial measurement unit (220), wherein the trigger mechanism (206) and the inertial measurement unit (220) are configured to launch the primary ballistics (116) when the recovery system (100) is substantially facing away from the ground.

9. The recovery system (100) of claim 1, further comprising a trigger mechanism (206) and an inertial measurement unit (220), wherein the trigger mechanism (206) and the inertial measurement unit (220) are configured to launch the primary ballistics (116) if the recovery system (100) is not substantially facing away from the ground and if circumstances necessitate.

10. The recovery system (100) of claim 8 or 9, wherein a ballistics system (208) comprising the primary ballistics (116) is configured to launch at a range of angles off normal to a top of a vehicle (10) to compensate if the vehicle (10) is upright but tilted off axis, the ballistics system (208) being configured to launch off normal to the top of the vehicle to compensate, such that the ballistics system (208) fires away from the earth along the axis of the earth's gravitational force.

11. The recovery system (100) of claim 1, wherein the guidance system (216) is configured to determine potential obstacles in the descent path and steer the parasail (110) to avoid collision with the obstacle.

12. A method for the recovery system (100) of claim 1, the method comprising:
determining (702) a need for an emergency recovery;
launching (704) the primary ballistics (116) and the parasail (110) from the housing (102);
launching (706) the secondary ballistics (117) after launching the primary ballistics (116),
wherein the secondary ballistics expands the parasail (110) by stretching the corners of the parasail (110);
determining (710) the landing site (520); and
actively steering (712) the parasail (110) and guiding the recovery system to the landing site.

13. The method of claim 12, further comprising:
engaging (708) a crow-bar mechanism (302), wherein the crowbar mechanism is configured to cease the operation of a propulsion system.

14. The method of claim 12, further comprising:
determining an orientation of the recovery system (100) with an inertial measurement unit (220); and
triggering a trigger mechanism (206) and launching the primary ballistics (116) when a vehicle (10), to which the recovery system (100) is attached, is upright.

15. The method of claim 12, further comprising:
determining potential obstacles in the descent path and steering the parasail (110) to avoid collision with the obstacle.

## Patentansprüche

1. Rückgewinnungssystem (100), das umfasst:
ein Gehäuse (102);
einen Gleitschirm (110), der einen Schirm (120) umfasst, der innerhalb des Gehäuses (102) gekoppelt ist und durch einen lösbaren Verschluss befestigt ist, der an dem Gehäuse (102) angebracht oder darin umfasst ist, wobei der Gleitschirm (110) zu einer kompakten Masse komprimiert ist und konfiguriert ist, um sich schnell auszubreiten;
Primärballistik (116), die an dem Gleitschirm (110) angebracht ist, wobei die Primärballistik (116) derart konfiguriert ist, dass sie den Gleitschirm (110) aus dem Gehäuse (102) auswirft;
ein Führungssystem (216) innerhalb des Gehäuses (102), wobei das Führungssystem (216) konfiguriert ist, um den Gleitschirm (110) zu lenken und das Rückgewinnungssystem (100) zu einem Landeplatz (520) zu führen; **dadurch gekennzeichnet, dass** das Rückgewinnungssystem (100) weiter umfasst
Sekundärballistik (117), die an dem Gleitschirm (110) angebracht ist, wobei die Sekundärballistik (117) konfiguriert ist, um nach der Primärballistik (116) aktiviert zu werden und die Ecken des Gleitschirmes (110) zu strecken.

2. Rückgewinnungssystem (100) nach Anspruch 1, wobei der Gleitschirm (110) mit einer oder mehreren Last tragenden Stützen (122) koppelt, die mit mindestens einem Aktuator (108) gekoppelt sind, der konfiguriert ist, um die Last tragenden Stützen (122) zu ziehen und zu lösen.

3. Rückgewinnungssystem (100) nach Anspruch 1, wobei der Gleitschirm (110) weiter Strukturrippen (123) entlang der Breite des Gleitschirms (110) umfasst.

4. Rückgewinnungssystem (100) nach Anspruch 1, das weiter eine Empfangseinheit (218) des globalen Navigationssatellitensystems, die mit dem Führungssystem (216) gekoppelt und konfiguriert ist, um dem Führungssystem (216) dreidimensionale Positionsinformationen bereitzustellen.

5. Rückgewinnungssystem (100) nach Anspruch 1, das weiter einen Speicher (222) umfasst, wobei der Speicher (222) eine Datenbank (224) enthält, die Daten für mindestens einen Landeplatz entlang einer Route umfasst.

6. Rückgewinnungssystem (100) nach Anspruch 1, das weiter einen Speicher (222) umfasst, wobei der Speicher (222) eine Datenbank (224) enthält, die Daten für mindestens eine dreidimensionale Karte umfasst.

7. Rückgewinnungssystem (100) nach Anspruch 1, wobei ein Zeitsteuermechanismus in der Sekundärballistik (117) gelagert ist.

8. Rückgewinnungssystem (100) nach Anspruch 1, das weiter einen Auslösemechanismus (206) und eine Trägheitsmesseinheit (220) umfasst, wobei der Auslösemechanismus (206) und die Trägheitsmesseinheit (220) konfiguriert sind, um die Primärballistik (116) auszuwerfen, wenn das Rückgewinnungssystem (100) im Wesentlichen von dem Boden abgewandt ist.

9. Rückgewinnungssystem (100) nach Anspruch 1, das weiter einen Auslösemechanismus (206) und eine Trägheitsmesseinheit (220) umfasst, wobei der Auslösemechanismus (206) und die Trägheitsmesseinheit (220) konfiguriert sind, um die Primärballistik (116) auszuwerfen, wenn das Rückgewinnungssystem (100) nicht wesentlich von dem Boden abgewandt ist und falls die Umstände es erfordern.

10. Rückgewinnungssystem (100) nach Anspruch 8 oder 9, wobei ein Ballistiksystem (208), das die Primärballistik (116) umfasst, konfiguriert ist, um in einem Bereich von Winkeln auszuwerfen, die von der Senkrechten zu einer Oberseite eines Fahrzeugs (10) abweichen, um zu kompensieren, falls das Fahrzeug (10) aufrecht steht, aber aus der Achse gekippt ist, wobei das Ballistiksystem (208) konfiguriert ist, um von der Senkrechten zu der Oberseite des Fahrzeugs auszuwerfen, um derart zu kompensieren, dass das Ballistiksystem (208) entlang der Achse der Erdgravitationskraft von der Erde weg feuert.

11. Rückgewinnungssystem (100) nach Anspruch 1, wobei das Führungssystem (216) konfiguriert ist, um potenzielle Hindernisse auf dem Abstiegsweg zu bestimmen und den Gleitschirm (110) zu lenken, um eine Kollision mit dem Hindernis zu vermeiden.

12. Verfahren für das Rückgewinnungssystem (100) nach Anspruch 1, wobei das Verfahren umfasst:
Bestimmen (702) einer Notwendigkeit für eine Notfallrückgewinnung;
Auswerfen (704) der Primärballistik (116) und des Gleitschirms (110) aus dem Gehäuse (102);
Auswerfen (706) der Sekundärballistik (117) nach dem Auswerfen der Primärballistik (116), wobei die Sekundärballistik den Gleitschirm (110) durch Strecken der Ecken des Gleitschirms (110) ausbreitet;
Bestimmen (710) des Landeplatzes (520); und
aktives Lenken (712) des Gleitschirms (110) und Führen des Rückgewinnungssystems zu dem Landeplatz.

13. Verfahren nach Anspruch 12, das weiter umfasst:
Eingreifen (708) in einen Brechstangenmechanismus (302), wobei der Brechstangenmechanismus konfiguriert ist, um den Betrieb eines Antriebssystems zu beenden.

14. Verfahren nach Anspruch 12, das weiter umfasst:
Bestimmen einer Ausrichtung des Rückgewinnungssystems (100) mit einer Trägheitsmesseinheit (220); und
Auslösen eines Auslösemechanismus (206) und Auswerfen der Primärballistik (116), wenn ein Fahrzeug (10), an dem das Rückgewinnungssystem (100) angebracht ist, aufrecht steht.

15. Verfahren nach Anspruch 12, das weiter umfasst:
Bestimmen potenzieller Hindernisse auf dem Abstiegsweg und Lenken des Gleitschirms (110), um eine Kollision mit dem Hindernis zu vermeiden.

## Revendications

1. Système de récupération (100) comprenant :
un boîtier (102) ;
une paravoile (110) comprenant une voilure (120) accouplée à l'intérieur du boîtier (102) et fixée par une attache détachable attachée au boîtier (102) ou comprise dans celui-ci, dans lequel la paravoile (110) est comprimée en une masse compacte et est conçue pour se déployer rapidement ;
une balistique primaire (116) attachée à la paravoile (110), dans lequel la balistique primaire (116) est conçue pour lancer la paravoile (110) depuis le boîtier (102) ;
un système de guidage (216) à l'intérieur du boîtier (102), dans lequel le système de guidage (216) est conçu pour diriger la paravoile (110) et guider le système de récupération (100) vers un site d'atterrissage (520) ; **caractérisé en ce que** le système de récupération (100) comprend en outre
une balistique secondaire (117) attachée à la paravoile (110), dans lequel la balistique secondaire (117) est conçue pour s'activer après la balistique primaire (116) et pour étirer les coins de la paravoile (110).

2. Système de récupération (100) selon la revendication 1, dans lequel la paravoile (110) est accouplée à un ou plusieurs supports porteurs (122) couplés à au moins un actionneur (108) conçu pour tirer et libérer les supports porteurs (122).

3. Système de récupération (100) selon la revendication 1, dans lequel la paravoile (110) comprend en outre des arêtes structurelles (123) le long de la largeur de la paravoile (110).

4. Système de récupération (100) selon la revendication 1, comprenant en outre une unité de réception de système global de navigation par satellite (218) couplée au système de guidage (216) et configurée pour fournir au système de guidage (216) des informations de position tridimensionnelles.

5. Système de récupération (100) selon la revendication 1, comprenant en outre une mémoire (222), dans lequel la mémoire (222) contient une base de données (224) comprenant des données pour au moins un site d'atterrissage le long d'un itinéraire.

6. Système de récupération (100) selon la revendication 1, comprenant en outre une mémoire (222), dans lequel la mémoire (222) contient une base de données (224) comprenant des données pour au moins une carte tridimensionnelle.

7. Système de récupération (100) selon la revendication 1, dans lequel un mécanisme de synchronisation est stocké dans la balistique secondaire (117).

8. Système de récupération (100) selon la revendication 1, comprenant en outre un mécanisme de déclenchement (206) et une unité de mesure inertielle (220), dans lequel le mécanisme de déclenchement (206) et l'unité de mesure inertielle (220) sont conçus pour lancer la balistique primaire (116) lorsque le système de récupération (100) est sensiblement opposé au sol.

9. Système de récupération (100) selon la revendication 1, comprenant en outre un mécanisme de déclenchement (206) et une unité de mesure inertielle (220), dans lequel le mécanisme de déclenchement (206) et l'unité de mesure inertielle (220) sont conçus pour lancer la balistique primaire (116) si le système de récupération (100) n'est pas sensiblement opposé au sol et si les circonstances l'exigent.

10. Système de récupération (100) selon la revendication 8 ou 9, dans lequel un système balistique (208) comprenant la balistique primaire (116) est conçu pour lancer selon une plage d'angles non perpendiculaires par rapport au sommet d'un véhicule (10) pour compenser le fait que le véhicule (10) soit droit mais incliné hors de l'axe, le système balistique (208) étant conçu pour lancer perpendiculairement au sommet du véhicule pour la compensation, de sorte que le système balistique (208) tire loin de la terre le long de l'axe de la force gravitationnelle de la terre.

11. Système de récupération (100) selon la revendication 1, dans lequel le système de guidage (216) est configuré pour déterminer des obstacles potentiels sur la trajectoire de descente et diriger la paravoile (110) pour éviter une collision avec l'obstacle.

12. Procédé pour le système de récupération (100) selon la revendication 1, le procédé comprenant :
la détermination (702) d'un besoin de récupération d'urgence ;
le lancement (704) de la balistique primaire (116) et de la paravoile (110) depuis le boîtier (102) ;
le lancement (706) de la balistique secondaire (117) après le lancement la balistique primaire (116), dans lequel la balistique secondaire étend la paravoile (110) en étirant les coins de la paravoile (110) ;
la détermination (710) du site d'atterrissage (520) ; et
la direction active (712) de la paravoile (110) et le guidage du système de récupération jusqu'au site d'atterrissage.

13. Procédé selon la revendication 12, comprenant en outre :
l'engagement (708) d'un mécanisme de pied de biche (302), dans lequel le mécanisme de pied de biche est conçu pour arrêter le fonctionnement d'un système de propulsion.

14. Procédé selon la revendication 12, comprenant en outre :
la détermination d'une orientation du système de récupération (100) avec une unité de mesure inertielle (220) ; et
le déclenchement d'un mécanisme de déclenchement (206) et le lancement de la balistique primaire (116) lorsqu'un véhicule (10), auquel le système de récupération (100) est attaché, est debout.

15. Procédé selon la revendication 12, comprenant en outre :
la détermination des obstacles potentiels sur la trajectoire de descente et la direction de la paravoile (110) pour éviter une collision avec l'obstacle.
